# EUROPÄISCHE PATENTSCHRIFT

(11) **EP 3 453 540 B1**
(45) Veröffentlichungstag und Bekanntmachung des Hinweises auf die Patenterteilung: **20.07.2022**
(21) Anmeldenummer: 18185674.1
(22) Anmeldetag: 26.07.2018
(51) Int. Cl.: B60B 30/06, B60R 9/10, B60B 1/00

(54) **RADSCHALE ZUR AUFNAHME EINES RADS EINES ZWEIRÄDRIGEN FAHRZEUGS**
WHEEL SHELL FOR RECEIVING OF A WHEEL OF A TWO-WHEELED VEHICLE
COQUE DE ROUE DESTINÉE À RECEVOIR UNE ROUE D'UN VÉHICULE À DEUX ROUES

(30) Priorität: 11.09.2017 DE 102017215959
(43) Veröffentlichungstag der Anmeldung: 13.03.2019
(73) Patentinhaber: ATERA GmbH, 88299 Leutkirch im Allgäu (DE)
(72) Erfinder: Hinderhofer, Jürgen, 88400 Biberach (DE)
(74) Vertreter: Patentanwälte Ruff, Wilhelm, Beier, Dauster & Partner mbB

(56) Entgegenhaltungen:
- EP-A1- 2 952 387
- EP-B1- 2 562 048
- WO-A1-97/08017
- DE-U1- 8 890 092
- US-A1- 2003 189 072
- US-A1- 2007 164 065
- US-A1- 2016 039 354
- US-B1- 6 431 423

## Beschreibung

Die Erfindung betrifft eine Radschale zur Aufnahme eines Rads eines Zweirads, insbesondere eines Fahrrads, mit einem Radschalenkörper, der in montiertem Zustand auf einem Trägerprofil einer Zweiradträgereinheit gehalten ist, wobei dem Radschalenkörper ein flexibles Spannband sowie ein Spann- und Arretierschloss für das Spannband zugeordnet sind.

Eine Radschale entsprechend dem Oberbegriff des Anspruchs 1 ist aus dem Dokument US 2003/189072 A1 bekannt.

Die DE 10 2010 015 652 B4 offenbart eine Radschale für einen Fahrradträger, die auf einem Trägerprofil fixierbar ist. Die Radschale weist einen aus Kunststoff hergestellten, einteiligen Radschalenkörper auf, an dessen einer Außenflanke ein Endbereich eines flexiblen Stützbands befestigt ist, und an dessen gegenüberliegender Außenflanke ein Spann- und Arretierschloss befestigt ist. Der Radschalenkörper ragt von dem Trägerprofil aus nach oben ab. Zur Fixierung eines Rads eines Fahrrads wird das Spannband oberhalb eines Felgenrings zwischen Speichen des Rads hindurchgeführt und in das Spann- und Arretierschloss eingesteckt. Durch manuelle Spannbewegungen wird das Spannband auf dem Felgenring festgezurrt und zieht so zwangsläufig eine Reifenabrollfläche des Rads gegen einen Stützbereich des Radschalenkörpers.

Aufgabe der Erfindung ist es, eine Radschale der eingangs genannten Art zu schaffen, die eine vereinfachte Montage und Demontage eines Rads ermöglichen.

Diese Aufgabe wird für die Radschale dadurch gelöst, dass das Spannband einends an einem Sicherungsschenkel gehalten ist, der an dem Radschalenkörper seitlich neben einem Aufnahmebereich für das Rad um eine Schwenkachse schwenkbeweglich gelagert ist, die derart in Längsrichtung des Radschalenkörpers erstreckt ist, dass der Sicherungsschenkel zwischen einer von dem Aufnahmebereich weg ragenden Freigabestellung und einer zu dem Aufnahmebereich hin ragenden Sicherungsstellung verschwenkbar ist. Dadurch, dass der Sicherungsschenkel umklappbar ist, kann das Rad bei einer Montage oder Demontage relativ flach von einer Seite her über den Radschalenkörper gebracht werden. Somit ist ein Einsetzen des Rads in den Aufnahmebereich des Radschalenkörpers von einer Seite her möglich. Beim Stand der Technik hingegen wird das Rad von oben her in einen entsprechenden Aufnahmebereich eingesetzt. Die erfindungsgemäße Lösung eignet sich in besonders vorteilhafter Weise für Radschalen, die bei Trägerprofilen von Fahrradträgern eingesetzt werden. In gleicher Weise ist die erfindungsgemäße Lösung jedoch auch für Motorradträger einsetzbar. Der Radschalenkörper ist aus Kunststoff hergestellt. Auch der Sicherungsschenkel, der relativ zu dem Radschalenkörper schwenkbeweglich gelagert ist, ist aus Kunststoff hergestellt. Die Radschale und ein entsprechendes Trägerprofil sind sowohl bei Fahrradheckträgern als auch bei Fahrraddachträgern einsetzbar, die heck- oder dachseitig an Kraftfahrzeugen montiert werden.

In Ausgestaltung der Erfindung ist das Spann- und Arretierschloss an einem Seitenbereich des Radschalenkörpers angeordnet, der gegenüberliegend zu dem Sicherungsschenkel vorgesehen ist, an dem das Spannband endseitig gehalten ist. Dadurch kann das Spannband von dem einen schwenkbeweglichen Sicherungsschenkel aus über einen Querschnitt eines Rads eines Zweirads geführt und gegenüberliegend in das Spann- und Arretierschloss eingeführt und vorzugsweise manuell gespannt und fixiert werden.

In weiterer Ausgestaltung der Erfindung ist das Spann- und Arretierschloss an einem weiteren Sicherungsschenkel gehalten, der an dem Seitenbereich des Radschalenkörpers um eine Schwenkachse schwenkbeweglich gelagert ist, die derart in Längsrichtung des Radschalenkörpers erstreckt ist, dass der Sicherungsschenkel zwischen einer von dem Aufnahmebereich weg ragenden Freigabestellung und einer zu dem Aufnahmebereich hin ragenden Sicherungsstellung verschwenkbar ist. Gemäß dieser Ausgestaltung sind an gegenüberliegenden Seitenbereichen des Radschalenkörpers insgesamt zwei schwenkbewegliche Sicherungsschenkel vorgesehen, wobei ein erster schwenkbeweglicher Sicherungsschenkel das Spannband und der zweite schwenkbewegliche Sicherungsschenkel das Spann- und Arretierschloss hält und trägt.

In weiterer Ausgestaltung der Erfindung ist der Sicherungsschenkel an einer dem Aufnahmebereich zugewandten Innenseite mit Stützprofilierungen versehen, die sich bei aufgenommenem Rad an dem Rad abstützen. Wenn die Radschale mit zwei gegenüberliegenden Sicherungsschenkeln versehen ist, sind beide Sicherungsschenkel im Bereich ihrer Innenseite mit entsprechenden Stützprofilierungen versehen. Die Stützprofilierungen dienen dazu, eine Haftreibung zwischen Flanken eines Reifenmantels des Rads und den Sicherungsschenkeln zu erhöhen, wenn die Sicherungsschenkel sich in ihrer Sicherungsstellung befinden und das Spannband festgezurrt ist. Durch das Festzurren des Spannbands nach der Verbindung mit dem Spann- und Arretierschloss werden die Sicherungsschenkel zwangsläufig nach innen gegen den Reifen des Rads gepresst.

In weiterer Ausgestaltung der Erfindung sind die Profilierungen quer zur Schwenkachse des Sicherungsschenkels erstreckt. Damit verlaufen die Profilierungen auch quer zur Umfangsrichtung des Reifens des Rads, so dass die Profilierungen sich in die Flanken des Reifenmantels eindrücken und zusätzlich zu einem entsprechenden Kraftschluss in Umfangsrichtung des Reifens auch noch einen begrenzten Formschluss bewirken können. Die Sicherungs- und Rückhaltekraft, die die Sicherungsschenkel auf den Reifen des Rads ausübt, wird hierdurch erhöht.

In weiterer Ausgestaltung der Erfindung ist das Spannband mit einem Stirnende mittels wenigstens eines mechanischen Befestigungselements an dem Sicherungsschenkel befestigt. Vorzugsweise ist das Spannband mittels eines Befestigungsniets an dem Sicherungsschenkel gehalten. Eine entsprechende Nietverbindung ist einfach und kostengünstig herstellbar und bietet eine sichere Befestigung des Spannbands am Sicherungsschenkel.

In weiterer Ausgestaltung der Erfindung ist das Spann- und Arretierschloss mittels wenigstens eines mechanischen Befestigungselements an dem Sicherungsschenkel befestigt. Vorzugsweise ist auch das Spann- und Arretierschloss mittels lediglich eines einzelnen Befestigungsniets an dem Sicherungsschenkel gehalten. Für beide Ausgestaltungen ist alternativ vorgesehen, das Spannband und/oder Spann- und Arretierschloss mittels mehrerer Befestigungselemente an dem jeweiligen Sicherungsschenkel zu sichern, wobei die Befestigungselemente auch als Schraub- oder Stiftverbindungen oder Ähnliches ausgestaltet sein können.

In weiterer Ausgestaltung der Erfindung sind das Spannband und/oder das Spann- und Arretierschloss jeweils außenseitig an dem jeweiligen Sicherungsschenkel angeordnet. Dies erleichtert zum einen die Montage des Spannbands und des Spann- und Arretierschlosses an dem jeweiligen Sicherungsschenkel. Zum anderen wird durch die außenseitige Anordnung des Spannbands und/oder des Spann- und Arretierschlosses die Anlage des jeweiligen Sicherungsschenkels in seiner Fixierstellung am Rad nicht durch das Spannband und/oder das Spann- und Arretierschloss beeinträchtigt.

Eine Trägerprofilanordnung einer Zweiradträgereinheit mit einem Trägerprofil sowie mit einer Radschale wie zuvor beschrieben , welche aber nicht zur beanspruchten Erfindung gehört, wird dadurch ermöglicht, dass der Radschalenkörper gleitbeweglich auf dem Trägerprofil angeordnet ist, und dass das Trägerprofil an gegenüberliegenden Seiten mit Führungsprofilierungen versehen ist, in die komplementäre Führungsprofilierungen des Radschalenkörpers derart eingreifen, dass die zueinander komplementären Führungsprofilierungen bei einer Fixierung des Spannbands an einem Radquerschnitt eines aufgenommenen Rads kraftschlüssig gegeneinander verklemmt werden. Dadurch ist eine zusätzliche Fixiereinrichtung für den gleitbeweglichen Radschalenkörper entbehrlich. Denn durch das Spannen und Fixieren des Spannbands und des Spann- und Arretierschlosses an einem entsprechenden Radquerschnitt wird der Radschalenkörper zwangsläufig relativ zu dem Trägerprofil verklemmt. Dies erleichtert eine Montage und Demontage eines Rads wie auch eine Verschiebung und Positionierung des Radschalenkörpers relativ zum Trägerprofil.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1a: zeigt in perspektivischer Darstellung einen Teilbereich einer Ausführungsform eines erfindungsgemäßen Trägerprofils mit einer Ausführungsform einer erfindungsgemäßen Radschale bei montiertem Rad eines Fahrrads,
- Fig. 1b: in einer Frontansicht die Darstellung gemäß Fig. 1a,
- Fig. 2: Trägerprofil und Radschale gemäß den Fig. 1a und 1b in perspektivischer Darstellung und in einer Arretierstellung eines Spannbands,
- Fig. 3: die Anordnung gemäß Fig. 2 in anderer Perspektive und
- Fig. 4: die Anordnung gemäß den Fig. 2 und 3 bei geöffnetem Spannband.

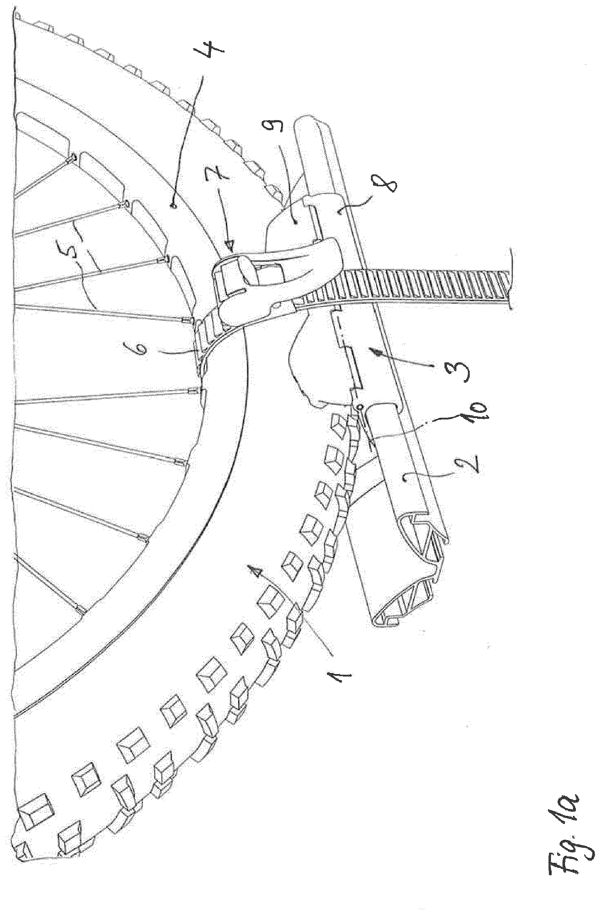

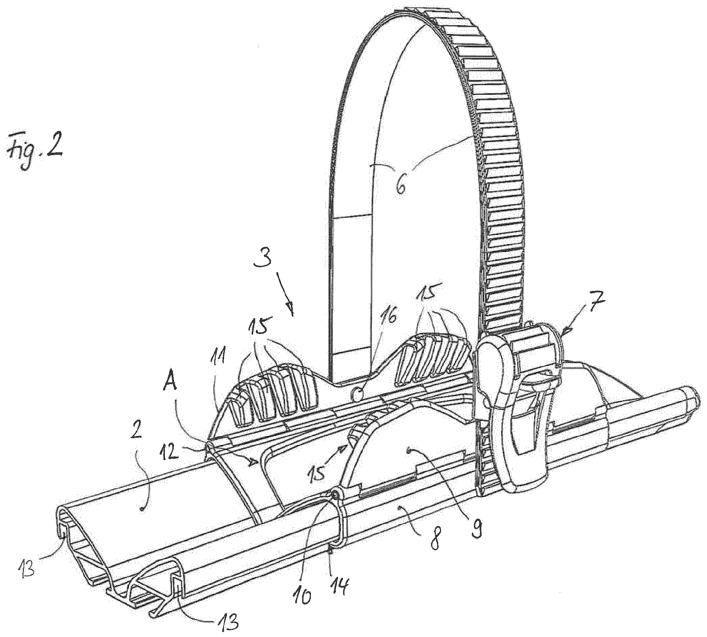

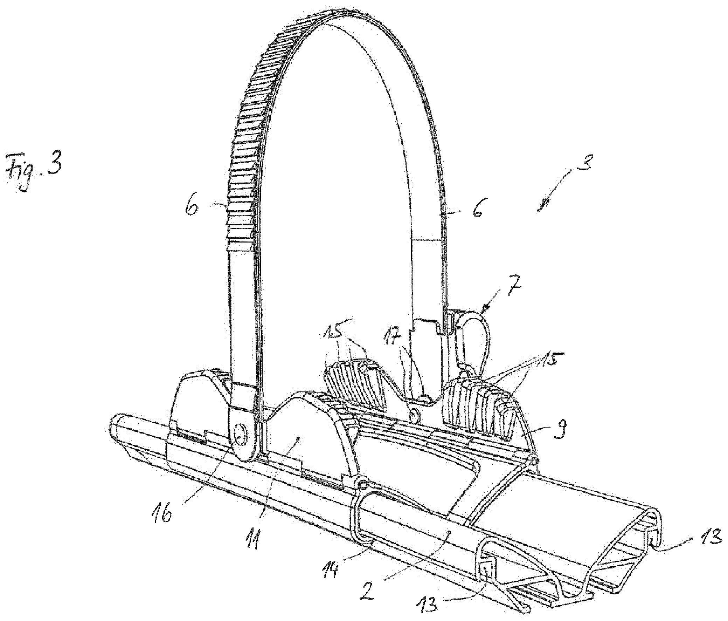

Ein Zweiradträger in Form eines Fahrradträgers weist gemäß den Fig. 1a bis 4 ein Trägerprofil 2 auf, das aus Metall, vorliegend aus einer Leichtmetalllegierung, hergestellt ist. Das Trägerprofil 2 ist in montiertem Zustand auf einer Tragstruktur des Fahrradträgers befestigt. Der Fahrradträger selbst ist in fertig montiertem Zustand entweder als Heckträger oder als Dachträger ausgeführt und in einem Dachbereich oder einem Heckbereich eines Kraftfahrzeugs montierbar.

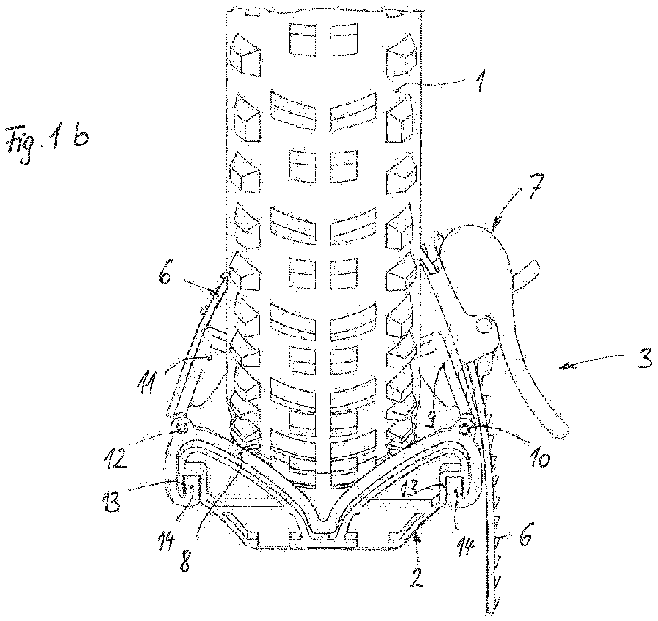

Das Trägerprofil 2 ist als Hohlprofil gestaltet, das im Bereich seiner Oberseite mit einer Rinnen- oder Keilform versehen ist, wie den Fig. 1a und 1b gut zu entnehmen ist. Im Bereich einer Unterseite sind Haltenuten vorgesehen, mittels der das Trägerprofil 2 auf der Tragstruktur des Fahrradträgers fixierbar ist. Das Trägerprofil 2 und die Radschale 3 bilden eine Trägerprofilanordnung im Sinne der Erfindung.

Auf dem Trägerprofil 2 angeordnet ist eine Radschale 3, die zur Fixierung eines Rads 1 eines Fahrrads dient. Das Rad 1 weist einen Reifen sowie eine Felge 4 auf, die mit Drahtspeichen 5 versehen ist.

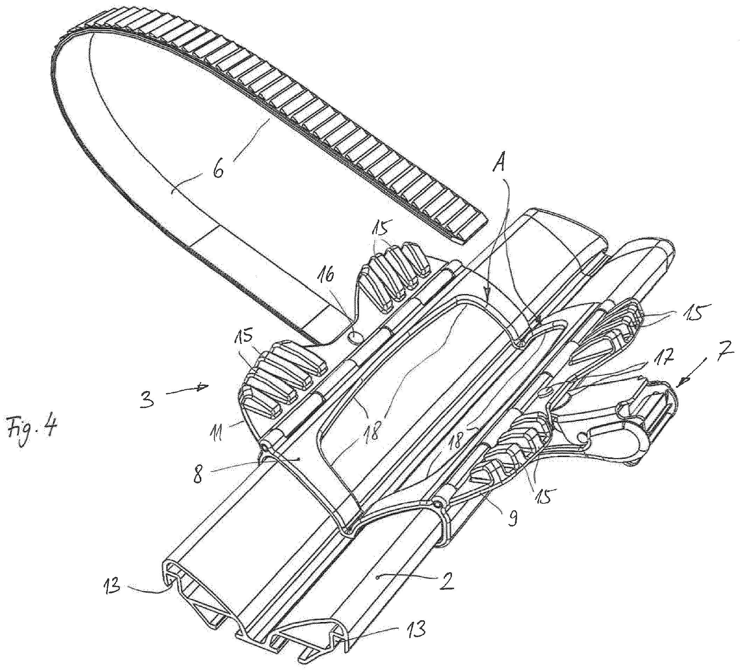

Die Radschale 3 weist einen Radschalenkörper 8 auf, der als Kunststoffbauteil gestaltet ist. Der Radschalenkörper 8 weist im Bereich seiner Oberseite einen keilartigen Aufnahmebereich A auf, der als Rahmenform mit einem innenliegenden, umlaufenden Rand 18 gestaltet ist, wie Fig. 4 zu entnehmen ist. Innerhalb der Rahmenform ist der Aufnahmebereich A zu der Oberseite des Trägerprofils 2 hin offen. Die Rahmenform ist auf die Keil- oder Wannenform der Oberseite des Trägerprofils 2 abgestimmt, so dass die Rahmenform des Aufnahmebereichs A des Radschalen-körpers 8 mit ihrer Unterseite weitgehend flächig auf einer Oberfläche der Oberseite des Trägerprofils 2 aufliegt. Die Keil- oder Wannenform des Aufnahmebereichs A des Radschalenkörpers 8 bildet im Bereich einer Mitte der Oberseite des Trägerprofils 2 eine nicht näher bezeichnete Knickung oder Falzung, die formstabil ausgeführt und nach unten gerichtet ist und in eine Mittelrinne der Oberseite des Trägerprofils 2 eintaucht. Der Radschalenkörper 8 weist zudem an seinen gegenüberliegenden Seitenbereichen nach unten ragende Seitenschenkel auf, die in als Führungsprofilierungen dienenden Führungsstegen 14 enden. Die Führungsstege 14 sind nach innen und nach oben gekrümmt, so dass die die freien Endbereiche der Seitenschenkel bildenden Führungsstege 14 parallel zueinander nach oben ragen. Die Führungsstege 14 tauchen in als komplementäre Führungsprofilierungen dienende Führungsnuten 13 des Trägerprofils 2 ein, die an unteren Seitenabschnitten des Trägerprofils 2 vorgesehen und nach unten offen sind. Die nach unten weisenden Führungsnuten 13 des Trägerprofils 2 weisen einen im Wesentlichen rechteckigen Querschnitt auf. Die nach oben in die Führungsnuten 13 eintauchenden Führungsstege 14 der Seitenbereiche des Radschalenkörpers 8 sind im Querschnitt komplementär rechteckig gestaltet, um in den Führungsnuten 13 in Längsrichtung des Trägerprofils 2 gleitbeweglich gelagert zu sein.

Wie anhand der Fig. 1b erkennbar ist, befindet sich zwischen dem Radschalenkörper 8 und der Außenkontur des Trägerprofils 2 in Hochrichtung ein gewisses Spiel von einem oder wenigen Millimetern. Dieses Spiel ist für eine Gleitbeweglichkeit des Radschalenkörpers 8 in Längsrichtung verantwortlich.

Der Radschalenkörper 8 weist auf Höhe der gegenüberliegenden Außenkanten des Trägerprofils 2 und damit im Bereich einer Oberseite des jeweiligen Seitenbereichs des Radschalenkörpers 8 jeweils einen Sicherungsschenkel 9, 11 auf, der mittels einer Schwenklagerung um eine Schwenkachse 10, 12 schwenkbeweglich an dem Radschalenkörper 8 gelagert ist. Die beiden Schwenkachsen 12 erstrecken sich parallel zueinander und parallel zu einer Mittellängsachse des Trägerprofils 2 und damit auch in Längsrichtung des Radschalenkörpers 8. Die jeweilige Scharnieranordnung für den jeweiligen Sicherungsschenkel 9 wird durch am Radschalenkörper 8 einerseits und am jeweiligen Sicherungsschenkel 9, 11 andererseits einstückig angeformte Scharnierhülsenabschnitte gebildet, durch die jeweils ein als Schwenkachse 10, 12 dienender Steckstift hindurchgesteckt ist. Die beiden Sicherungsschenkel 9, 11 auf gegenüberliegenden Seiten des Radschalenkörpers 8 sind identisch zueinander gestaltet. Beide Sicherungsschenkel 9, 11 weisen an ihrer Innenseite Stützprofilierungen 15 auf, die zumindest weitgehend quer zur Längserstreckung der jeweiligen Schwenkachse 10, 12 ausgerichtet sind und als von einer Oberfläche der Innenseite des jeweiligen Sicherungsschenkels 11 aus erhaben abragende und parallel zueinander ausgerichtete Stützstege gestaltet sind. Die Stützprofilierungen 15 sind einstückig am jeweiligen Sicherungsschenkel 9, 11 angeformt. Die Stützprofilierungen 15 dienen dazu, sich in fixiertem Zustand des Rads 1 gegen die Seitenflanken des Reifens des Rads 1 zu pressen und so die Rückhaltekraft für das Rad 1 zu erhöhen.

In einer Freigabestellung sind die beiden Sicherungsschenkel 9, 11 so weit nach außen umgeklappt, dass sie nicht oder nahezu nicht über die Oberseiten der Seitenbereiche des Radschalenkörpers 8 nach oben abragen.

An dem einen Sicherungsschenkel 11 ist ein flexibles Spannband 6 befestigt. An dem anderen Sicherungsschenkel 9, d.h. auf der gegenüberliegenden Seite des Radschalenkörpers 8, ist ein Spann- und Arretierschloss 7 befestigt. Das Spannband 6 ist als Rastband gestaltet und mit einem Endbereich an einer Außenseite des Sicherungsschenkels 11 positioniert und mittels eines Befestigungsniets 16, d.h. eines mechanischen Befestigungselements, an dem Sicherungsschenkel 11 gehalten. Der übrige Teil des Spannbands 6 ragt frei von dem Sicherungsschenkel 11 ab.

Auch das Spann- und Arretierschloss 7 ist mittels eines Befestigungsniets 17 an einer Außenseite des Sicherungsschenkels 9 befestigt. Das Spann- und Arretierschloss 7 weist einen Spannhebel und eine Rastklinkenanordnung auf, wobei der Spannhebel manuell betätigbar ist.

Um ein Rad 1 gemäß den Fig. 1a und 1b in der Radschale 3 und damit auf dem Trägerprofil 2 fixieren zu können, werden die beiden Sicherungsschenkel 9 und 11 nach außen in ihre Freigabestellung verschwenkt und das flexible Spannband 6 hängt frei von dem einen Sicherungsschenkel 11 ausgehend zur Seite oder nach unten. Nun wird das Rad 1 in den Aufnahmebereich A eingesetzt, wobei eine Lauffläche des Reifenmantels des Rads 1 direkt auf der Oberfläche des Trägerprofils 2 in dem von dem Randbereich 18 umgrenzten Abschnitt der Rahmenform des Radschalenkörpers 8 abgestützt ist. Anschließend werden die beiden Sicherungsschenkel 11 und 9 nach oben geschwenkt, bis die Stützprofilierungen 15 der beiden Sicherungsschenkel 9, 11 an gegenüberliegenden Seitenflanken des Reifenmantels des Rads 1 anliegen. Gleichzeitig oder anschließend wird das Spannband 6 durch die Radspeichen 5 des Rads 1 hindurchgeführt und übergreift die Felge 4. Das Spannband 6 wird in das Spann- und Arretierschloss 7 hineingeschoben und anschließend durch den Spannhebel gespannt, bis das Spannband 6 fest gegen die Felge 4 gezogen ist. Dadurch pressen sich zum einen zwangsläufig die Stützprofilierungen 15 der Sicherungsschenkel 11 und 9 gegen die Seitenflanken des Reifenmantels. Zum anderen werden die Sicherungsschenkel 9 und 11 aufgrund der durch die Spannung des Spannbands 6 bewirkten Zugkraft zwangsläufig nach oben gezogen. Da die Sicherungsschenkel 9 und 11 über die Scharnieranordnungen und die Schwenkachsen 10, 12 mit den Seitenbereichen des Radschalenkörpers 8 verbunden sind, werden hierdurch auch zwangsläufig die Seitenbereiche des Radschalenkörpers 8 nach oben gezogen. Dies führt dazu, dass die Führungsstege 14 ebenfalls nach oben gezogen werden und sich so gegen den jeweiligen Grund der jeweiligen Führungsnut 13 des Trägerprofils 2 pressen. Dadurch wird neben der Fixierung des Rads 1 in der Radschale 3 auch eine kraftschlüssige Fixierung des Radschalenkörpers 8 an dem Trägerprofil 2 erzielt, ohne dass zur Fixierung des Radschalenkörpers 8 an dem Trägerprofil 2 weitere Befestigungselemente notwendig sind.

Zum Öffnen des Spannbands 6 und zum Freigeben des Rads 1 wird in einfacher Weise nach dem Lösen des Spann- und Arretierschlosses 7 das Spannband 6 aus dem Spann- und Arretierschloss 7 nach oben herausgezogen, die beiden Sicherungsschenkel 9 und 11 werden aufgeklappt, wenn sie nicht ohnehin bereits durch ihr Eigengewicht nach außen und nach unten schwenken, und das Rad 1 kann entnommen werden.

## Patentansprüche

1. Radschale (3) zur Aufnahme eines Rads (1) eines Zweirads, insbesondere eines Fahrrads, mit einem Radschalenkörper (8), der in montiertem Zustand auf einem Trägerprofil (2) einer Zweiradträgereinheit gehalten ist, wobei dem Radschalenkörper (8) ein flexibles Spannband (6) sowie ein Spann- und Arretierschloss (7) für das Spannband (6) zugeordnet sind, **dadurch gekennzeichnet, dass** das Spannband (6) einends an einem Sicherungsschenkel (11) gehalten ist, der an dem Radschalenkörper (8) seitlich neben einem Aufnahmebereich (A) für das Rad (1) um eine Schwenkachse (12) schwenkbeweglich gelagert ist, die derart in Längsrichtung des Radschalenkörpers (8) erstreckt ist, dass der Sicherungsschenkel (11) zwischen einer von dem Aufnahmebereich (A) weg ragenden Freigabestellung und einer zu dem Aufnahmebereich (A) hin ragenden Sicherungsstellung verschwenkbar ist.

2. Radschale nach Anspruch 1, **dadurch gekennzeichnet, dass** das Spann- und Arretierschloss (7) an einem Seitenbereich des Radschalenkörpers (8) angeordnet ist, der gegenüberliegend zu dem Sicherungsschenkel (11) vorgesehen ist, an dem das Spannband (6) endseitig gehalten ist.

3. Radschale nach Anspruch 2, **dadurch gekennzeichnet, dass** das Spann- und Arretierschloss (7) an einem weiteren Sicherungsschenkel (9) gehalten ist, der an dem Seitenbereich des Radschalenkörpers (8) um eine Schwenkachse (10) schwenkbeweglich gelagert ist, die derart in Längsrichtung des Radschalenkörpers (8) erstreckt ist, dass der Sicherungsschenkel (9) zwischen einer von dem Aufnahmebereich (A) weg ragenden Freigabestellung und einer zu dem Aufnahmebereich (A) hin ragenden Sicherungsstellung verschwenkbar ist.

4. Radschale nach einem der vorhergehenden Ansprüche, **dadurch gekennzeichnet, dass** der Sicherungsschenkel (9, 11) an einer dem Aufnahmebereich (A) zugewandten Innenseite mit Stützprofilierungen (15) versehen ist, die sich bei aufgenommenem Rad (1) an dem Rad (1) abstützen.

5. Radschale nach Anspruch 4, **dadurch gekennzeichnet, dass** die Stützprofilierungen (15) quer zur Schwenkachse (10, 12) des Sicherungsschenkels (9, 11) erstreckt sind.

6. Radschale nach einem der vorhergehenden Ansprüche, **dadurch gekennzeichnet, dass** das Spannband (6) mit einem Stirnende mittels wenigstens eines mechanischen Befestigungselements (16) an dem Sicherungsschenkel (11) befestigt ist.

7. Radschale nach einem der Ansprüche 3 bis 6, **dadurch gekennzeichnet, dass** das Spann- und Arretierschloss (7) mittels wenigstens eines mechanischen Befestigungselements (17) an dem Sicherungsschenkel (9) befestigt ist.

8. Radschale nach einem der vorhergehenden Ansprüche, **dadurch gekennzeichnet, dass** das Spannband (6) und/oder das Spann- und Arretierschloss (7) jeweils außenseitig an dem jeweiligen Sicherungsschenkel (9, 11) angeordnet sind.

## Claims

1. Wheel tray (3) for receiving a wheel (1) of a two-wheeler, in particular of a bicycle, having a wheel tray body (8) which in the fitted state is held on a carrier section (2) of a two-wheeler carrier unit, a flexible ratchet strap (6) and a ratchet lock (7) for the ratchet strap (6) being associated with the wheel tray body (8), **characterized in that** the ratchet strap (6) is held at one end on a securing flap (11) which is swivelably mounted on the wheel tray body (8), on a side adjacent to a receiving area (A) for the wheel (1), about a swivel axis (12) which is extended in the longitudinal direction of the wheel tray body (8) such that the securing flap (11) is swivelable between a release position swung away from the receiving area (A) and a securing position swung towards the receiving area (A).

2. Wheel tray according to claim 1, **characterized in that** the ratchet lock (7) is arranged on a side area of the wheel tray body (8) which is provided opposite the securing flap (11) on which the ratchet strap (6) is held at the end.

3. Wheel tray according to claim 2, **characterized in that** the ratchet lock (7) is held on a further securing flap (9) which is swivelably mounted, on the side area of the wheel tray body (8), about a swivel axis (10) which is extended in the longitudinal direction of the wheel tray body (8) such that the securing flap (9) is swivelable between a release position swung away from the receiving area (A) and a securing position swung towards the receiving area (A).

4. Wheel tray according to any of the preceding claims, **characterized in that** the securing flap (9, 11) is provided, on an inner side facing the receiving area (A), with support profiles (15) which brace against the wheel (1) when the wheel (1) is received.

5. Wheel tray according to claim 4, **characterized in that** the support profiles (15) are extended transversely to the swivel axis (10, 12) of the securing flap (9, 11).

6. Wheel tray according to any of the preceding claims, **characterized in that** the ratchet strap (6) is fastened to the securing flap (11) with a front end by means of at least one mechanical fastening element (16).

7. Wheel tray according to any of claims 3 to 6, **characterized in that** the ratchet lock (7) is fastened to the securing flap (9) by means of at least one mechanical fastening element (17).

8. Wheel tray according to any of the preceding claims, **characterized in that** the ratchet strap (6) and/or the ratchet lock (7) are each arranged on the outside of the respective securing flap (9, 11).

## Revendications

1. Support de roue (3) pour loger une roue (1) d'un deux-roues, notamment d'un vélo, avec un corps de support de roue (8) qui est maintenu, à l'état monté sur un profilé porteur (2) d'une unité porteuse de deux-roues, sachant que sont associés au corps de support de roue (8) un tendeur flexible (6) ainsi qu'une boucle de serrage et d'arrêt (7) pour le tendeur (6), **caractérisé en ce que** le tendeur (6) est maintenu à une extrémité par un montant de sûreté (11) qui est monté au corps de support de roue (8), latéralement à côté d'une zone de logement (A) pour la roue (1), de manière à pivoter autour d'un axe de pivotement (12) qui s'étend dans le sens longitudinal du corps de support de roue (8) de sorte que le montant de sûreté (11) est pivotable entre une position de libération sortant de la zone de logement (A) et une position de sûreté pénétrant dans la zone de logement (A).

2. Support de roue selon la revendication 1, **caractérisé en ce que** la boucle de serrage et d'arrêt (7) est disposée au niveau d'une zone latérale du corps de support de roue (8) qui est prévue en face du montant de sûreté (11) auquel le tendeur est maintenu côté extrémité.

3. Support de roue selon la revendication 2, **caractérisé en ce que** la boucle de serrage et d'arrêt (7) est maintenue à un autre montant de sûreté (9) qui est monté sur la zone latérale du corps de support de roue (8) de manière à pivoter autour d'un axe de pivotement (10) qui s'étend dans le sens longitudinal du corps de support de roue (8) de sorte que le montant de sûreté (9) est pivotable entre une position de libération sortant de la zone de logement (A) et une position de sûreté pénétrant dans la zone de logement (A).

4. Support de roue selon une des revendications précédentes, **caractérisé en ce que** le montant de sûreté (9, 11) est prévu sur un côté intérieur tourné vers la zone de logement (A) avec des profilages de support (15) qui s'appuient sur la roue (1) quand la roue est logée (1) dans le support.

5. Support de roue selon la revendication 4, **caractérisé en ce que** les profilages de support (15) s'étendent transversalement à l'axe de pivotement (10, 12) du montant de sûreté (9, 11).

6. Support de roue selon une des revendications précédentes, **caractérisé en ce que** le tendeur (6) est fixé au niveau d'une extrémité frontale au montant de sûreté (11) au moyen d'au moins un élément de fixation mécanique (16).

7. Support de roue selon une des revendications 3 à 6, **caractérisé en ce que** la boucle de serrage et d'arrêt (7) est fixée au montant de sûreté (9) au moyen d'au moins un élément de fixation mécanique (17).

8. Support de roue selon une des revendications précédentes, **caractérisé en ce que** le tendeur (6) et/ou la boucle de serrage et d'arrêt (7) sont disposés respectivement côté extérieur sur le montant de sûreté respectif (9, 11).
